# EUROPEAN PATENT APPLICATION

(11) **EP 2 316 274 A2**
(43) Date of publication of application: **04.05.2011**
(21) Application number: 11153287.5
(22) Date of filing: 21.04.2008
(51) Int. Cl.: A23C 9/16, A23F 5/14, A23F 5/40, A23L 1/00, A23L 2/39, A23L 2/60, A23C 11/04, A23F 5/38, A23L 2/395

(54) **Improvement of cold water solubility of powders**

(30) Priority: 24.04.2007 EP 07106865
(62) Divisional of application: 08736424.6
(71) Applicant: Nestec S.A., 1800 Vevey (CH)
(72) Inventor: Gonus, Philippe, 1400, Yverdon-les-Bains (CH); Rosse, Marcel, 2024, Saint-Aubin-Sauges (CH)

(57) **Abstract**

The present invention relates to powders, preferably milk-based powders, in particular instant drink powders which have improved cold water solubility. It further relates to capsules comprising said powders and to a method of preparing a cold instant drinks.

## Description

### Field of the invention

The present invention relates to powders, preferably milk-based powders, in particular instant drink powders which have improved cold water solubility. It further relates to capsules comprising said powders and to a method of preparing cold instant drinks.

### Background of the invention

During the last few decades there has been a growing market for powders which are instantly soluble in cold liquids. Such powders find applications in the making of beverages or liquid comestibles based on dry, powdered nutritional ingredients.

In this respect, it has been known for a long time that an agglomerated powder, i.e. a powder where the single particles have formed bigger granulates or agglomerates, possesses improved wettability when mixed with water than it is the case with ordinary powder.

For instance, US 3,821,436 describes powders to be used in foods which are free-flowing, non-hygroscopic and easily water soluble in both hot and cold liquids. The examples therein show that wettability and therefore solubility in water at 9°-10°C are influenced by the size of the particles.

Agglomeration is however not sufficient in the case of fat-containing powders, as these tend to have a thin layer of fat on the surface of the particles, making them repellent in cold water. Indeed, the fat-covered surface of the powder will be hydrophobic resulting in a high contact angle of the powder to the liquid which will therefore render the powder less wettable and less soluble.

Furthermore, if the melting point of the fat is higher than the temperature of the solvent, these powders will show even worse wettability.

A solution to this problem is the use of surface active agents (surfactants), such as soy lecithin for example, which can modify the surface properties of these powders.

However, the use of surfactants can also negatively influence other properties of these powders such as flowability and can even affect the organoleptic properties (e.g. characteristic soy flavour).

Another solution proposed in US 4,737,369 is to coat the fat-containing powders with mono- and/or diglycerides of medium-chain fatty acids.

However, for milk-based powders in particular, further solubility problems are encountered due to the presence of milk proteins.

US 5,882,716 addresses the problem of solubility but is mainly concerned with solubility in hot liquids.

GB-A-1022775 describes a chocolate drink composition comprising granules which consist of a sugar core onto which a coating of particles comprising finely divided dry cocoa powder is agglomerated with an edible vegetable fat. The vegetable fat may be molten cocoa butter, sun-flower oil, soya-bean oil or groundnut oil. The oils or fats used in this composition are partially unsaturated long-chain triglycerides (C16 and C18).

GB-A-1293476 describes a sugar product which can readily be dispersed in water and other aqueous media such as milk.

EP-A-0377849 describes beverage mixes containing sugar agglomerates which are coated with a layer of fat-based confectionary coating.

US 2005/0255202 A1 describes a process for encapsulating a solid food particle with a liquid encapsulating material. The food particles can be encapsulated or coated in combinations such as sucrose and fat.

DE 70 29 515 U describes a capsule for the production of a sugared tea beverage. The capsule consists of a sugar coating which does not contain oily components.

JP50-135254 relates to a method for the production of a readily cold-water dispersible wholemilk-powder-type fat-containing powder product. The 99-60 wt% of a vegetable oil/fat, vegetable hydrogenated oil or vegetable hydrogenated and fractionated oil, or a blended oil thereof, and 1-40 wt% of a medium chain triglyceride are mixed together to obtain a highly stable vegetable starting material oil of iodine value no more than 85 and melting point no more than 14 degree Celcius. The fats or oils including medium chain triglyceride oil are mixed with milk powder, water and then dried. The fats or oils including the medium chain triglycerides are used as part of the fat phase of the dried powder.

### Object of the invention

It is thus the object of the present invention to improve the solubility of powders, in particular milk-based powders in a cold liquid such as water and to produce instant drinks having good organoleptic properties.

### Summary of the invention

The present invention relates in a first aspect to an instant drink powder comprising particles of sugar and/or bulking agent, wherein said particles are at least partially coated with a food-grade oil.

A capsule comprising an instant drink powder according to any of claims 1 to 10 also forms part of the present invention.

In a further aspect, the invention also pertains to the use of a food-grade oil to improve the cold water solubility of powders comprising particulate sugar and/or bulking agent.

A method for producing an instant drink powder comprising particles of sugar and/or bulking agent, comprising the steps of:
a. Coating at least part of said particles with a food-grade oil to form a premix and
b. Incorporating the premix to further powder ingredients to form the final instant drink powder,
represents another aspect of the invention.

A kit for the preparation of an instant drink comprising at least two capsules, wherein a first capsule comprises a creamer component and sugar, and
wherein a second capsule comprises a main flavour component and sugar also forms part of the present invention.

Finally, the invention also proposes a method for the production of an instant drink, comprising the steps of:
a. Injecting a volume of cold water in at least one capsule comprising particules of sugar and/or bulking agent, wherein at least part of said particles are coated with a food-grade oil, and
b. Delivering the instant drink being the result of the interaction of water with the contents of the capsule.

### Detailed description of the invention

In the present description, the term "cold water" refers to water at ambient or chilled temperature, i.e. at between 4°C to 30°C.

The term "capsule" refers generally to a package containing the ingredients including rigid or partly flexible capsules, cartridges, pods for insertion in a beverage device usually compatible to receive a capsule.

The present invention relates to instant drink powder comprising particulate sugar, wherein the sugar particles are at least partially coated with a food-grade oil. Preferably, the instant drink powder is milk-based and comprises milk powder.

The oil comprises, more preferably essentially consists of, short and medium-chain saturated triglycerides, wherein the triglycerides more preferably comprise, more preferably essentially consists of, C4-C14, preferably C8-C12, most preferably C8-C10, saturated fatty acid chains. Under C4-C14 is to be understood a fatty acid chain comprising 4 to 14 carbon atoms. Similarly, under C8-C10 is to be understood a fatty acid chain comprising 8 to 10 carbon atoms.

The oils used in the present invention can also be termed small to medium-chain triglycerides. They are typically obtained by esterifying glycerol of vegetal origin with mixtures of caprylic and capric acids which are fractionated from coconut and/or palm kernel oils. The oil is typically liquid at ambient temperature. Typically, no catalysts are used for the esterification step. Refining results in a high stability oil with essentially no odour or flavour. These oils can be easily obtained commercially.

According to an embodiment of the invention, the oil is present in an amount of 0.1-5%, preferably 0.1-1%, most preferably 0.2-0.5% by weight, of the total amount of powder.

Furthermore, the oil may be present in an amount of 0.5-1.5%, preferably 0.8-1.1% by weight of the total amount of sugar. It may further constitute 2-8%, preferably 3-7%, more preferably about 4% by weight of the total fat solids present in the powder.

The powder of the invention may further comprise any of dairy or non-dairy creamers, lecithin, sweeteners, aroma, soluble coffee, soluble tea, soluble fruit powder, soluble chocolate powder, aroma, citric acid etc. or any combinations thereof. Preferably the creamer used is a dairy creamer which comprises skimmed milk, maltodextrins, vegetal oil, buffer salts. Such creamers are readily available commercially. A foam booster may also be present in the powder of the invention although this is not necessary.

According to the invention, the drink powder of the invention may be an ice coffee powder, ice cappuccino powder, ice tea powder, ice chocolate powder, cafe frappé powder, milk shake powder, fruit drink powder etc. It is preferably milk-based.

Thus, the resulting instant drink preferably has a typical creamy, milky mouthfeel and comprises a white foam.

The powders of the invention present the advantage that cold water miscibility and solubility is improved.

By cold water is meant water at room temperature as well as chilled water, i.e. water having a temperature between 4° to 30°C.

Solubility of instant powders depends on different dissolution steps in water, namely wettability, sinkability and dispersibility. Wettability is a measure of the ability of a powder to be wetted with water at a given temperature. This analytical method is commonly used when producing instant powders. Wettability depends on the surface of the agglomerates or single particles. For instance, the surface of the agglomerates or single particles could be water repellent or could absorb water too quickly such as to form a film through which the water can not penetrate.

The standard conditions used for the solubility test is to contact 15 to 25g of powder to 150mL of water at 20°C. Under these conditions, the powders of the invention are at least 90% soluble, preferably at least 95% soluble, more preferably at least 99% soluble.

Additionally, the mechanical resistance of the powders is improved. Furthermore, a significant reduction in the powder density is also obtained. The powder thus lends itself to applications where it is submitted to a certain grinding, for example when filled into capsules. Furthermore, when filling powders into capsules, the dosing-filling device increases the density of the powder. This problem is thus avoided when using the powders of the present invention.

Without wishing to be bound by theory, it is assumed that the fines (small particles) of powders are partly the cause of bad solubility. Furthermore, when used in capsules, they can block the capsules during delivery. The oil thus acts to reduce the formation of fines by agglomeration of the fines and thus reduces the density.

A capsule comprising an instant drink powder described above also forms part of the invention. Preferably the instant drink powder is milk-based. By capsule is meant any type of case capable of enclosing the instant drink powder. The term "capsule" refers generally to a package containing the ingredients including rigid or partly flexible capsules, cartridges, pods for insertion in a beverage device usually compatible to receive a capsule.

Typically, the capsule has the capacity to hold 2-50g of the drink powder, preferably between 3-30g. Preferably the capsule is sealed. It may comprise a closed chamber containing said powder and a means allowing said capsule to be opened at the time of its use and for allowing said instant drink to flow out. Preferably, the capsule is designed to be extracted by injection of fluid under pressure in an extraction device. Such capsules are known in the art. Suitable capsules which can be used in the present invention are for example described in EP 1 472 156 B1. Preferably, the capsules are impervious to light and moisture.

According to a further embodiment of the present invention, the use of food-grade oil to improve the cold water solubility of powders comprising particulate sugar and/or particulate bulking agent is also provided. Preferably, the powders are milk-based powders. Preferably, the food-grade oil is such as that described above with respect to the powders of the invention.

Preferably, the oil is present as a coating of at least part of the sugar and/or bulking agent particles. The particles thus act as carrier for the oil at the same time as providing body, solubility and sweet taste to the powders of the invention.

Typically, the oil is present in an amount of 0.1-1%, preferably 0.2-0.5% by weight, of the total amount of powder. Furthermore, the oil may be present in an amount of 0.5-1.5%, preferably 0.8-1.1% by weight of the total amount of sugar and/or bulking agent. It may further constitute 2-8%, preferably 3-7%, more preferably about 4% by weight of the total fat solids present in the powder.

Moreover, the oil may be used in combination with lecithin.

A method for producing an instant drink powder comprising particulate sugar, according to the invention, comprises the first step of coating at least part of the sugar particles with a food-grade oil to form a premix.

The oil used is described above with respect to the powders of the invention. In an embodiment, the oil coats the whole amount of sugar and eventually bulking agent present in the instant drink powder.

The sugar particles are preferably particles of saccharose or any other possible crystalline sugars such as lactose or fructose.

The particles of bulking agent may be added to the ingredients as major or minor amounts. The bulking agents include sugar replacers such as polyols, fibers, starches, maltodextrines and combination thereof. Examples of bulking agents can be sorbitol, maltitol or inulin.

Preferably, the oil is present in an amount of 0.5-1.5%, preferably 0.8-1.1% by weight of the total amount of sugar. The mixing may be carried out in standard equipment known to the skilled person.

In a second step the premix, comprising at least part or the whole of the particles coated with oil, is incorporated to further powder ingredients to form the final instant drink powder.

Further powder ingredients preferably comprise milk powder. They may also include any of dairy or non-dairy creamers, lecithin, sweeteners, sugar, soluble coffee, soluble tea, soluble fruit drink, soluble chocolate powder, aroma, citric acid or any combinations thereof.

The final instant drink powder preferably comprises 0.1-1%, preferably 0.2-0.5% by weight of oil.

It is advantageous, according to the present invention, to provide a kit for the preparation of an instant drink comprising at least two capsules wherein a first capsule comprises a creamer component and sugar, and wherein a second capsule comprises a main flavour component, and sugar.

A first capsule thus comprises a dairy or non-dairy creamer, preferably a dairy creamer. Typical dairy creamers comprise skimmed milk, maltodextrins, vegetal oil and buffer salts. Such creamers are commercially available. The creamer enables to obtain a creamy taste.

The second capsule, on the other hand, contains the main flavour component which can be selected from soluble coffee, soluble tea, soluble fruit drink, soluble chocolate powder etc. or any mixtures thereof.

The second capsule may further comprise additional flavours, aroma etc. such as vanilla flavour, milk cream flavour, citric acid etc.

In a preferred embodiment, at least part of the sugar and/or bulking agent particles of the first and/or second capsule are coated with a food-grade oil. The sugar is typically a crystalline sugar. The food-grade oil preferably comprises saturated triglycerides. Most preferably, the triglycerides comprise C4-C12, preferably C8-C10 saturated fatty acid chains.

In a most preferred embodiment, both capsules comprise milk powder. Thus, both capsules comprise a part of the milk powder and a part of the sugar. In this way, the sugar provides an effect on the milk powder in both capsules. Furthermore, the creamer component is kept separate from the main flavour component.

The advantage presented by such a kit is that the solubility of the powders is improved. It has been observed that when all ingredients are present in one capsule, this may give rise to flocculation issues of the milk with the coffee, for example. When using two capsules both containing part of the sugar and part of the milk powder, the solubility is surprisingly increased. Also, a drink with sufficient "dairy taste" can be obtained. Furthermore, when the sugar particles are further coated with a food-grade oil, according to a preferred embodiment, it has been observed that the solubility of the powders is even further improved.

Under another aspect of the invention is provided a method for the production of an instant drink, comprising the first step of injecting a volume of cold water in at least one capsule comprising particulate sugar and/or bulking agent, wherein at least part of the said particles are coated with a food-grade oil. Preferably, the capsule comprises milk powder. The food-grade oil is such as describe above in relation to the powders of the invention.

Water injection is typically done under pressure without any mechanical stirrer or other device. The injection of the water creates mixing of water with the ingredients.

In a second step, the instant drink may be delivered, said instant drink being the result of the interaction of water with the contents of the capsule. The interaction results in dissolution of the contents of the capsule in the water.

The method is typically carried out using a beverage capsule machine. These are known in the art.

The result is that a cold beverage can be obtained with a high percentage of solubilised ingredients in a matter of a few seconds.

The kit of the invention comprising at least two capsules as described above may be used in a method according to the invention whereby at least said two capsules are sequentially injected with cold water to produce a cold instant beverage.

Thus, the capsules may be served in sequence in a beverage capsule machine for example. The capsule comprising the creamer is generally first injected followed by the capsule comprising the main flavour component. The result is a beverage, preferably cold, in two separate phases or slightly mixed phases. The white phase (creamer phase) is on top of the coffee phase, when coffee is used as the main flavour component for example.

Using the method of the invention, the instant drinks obtained may be an ice coffee, ice cappuccino, ice tea, ice chocolate, cafe frappé, milk shake or fruit drink. Preferably, these are milk-based. Furthermore, they have a creamy, milky mouthfeel, have a foamy aspect and excellent organoleptic properties.

The present invention is further illustrated hereinafter with the following non-limiting examples.

### Examples

### Example 1

### Recipe for "light" ice cappuccino all in one capsule

| **Ingredients** | **Quantity (grams)** |
|---|---|
| Instant coffee | 1.0-2.0 |
| Sugar | 3.0-4.0 |
| Whole milk powder | 7.0-9.0 |
| Sugar replacer (e.g. aspartame) | 0.01-0.05 |
| Flavours | 0.05-0.15 |
| Foam booster | 0-1.0 |

The inventors have found that a soluble powder could also be obtained in one capsule when using the above recipe. Such product is less creamy and the presence of a foam booster is generally needed.

### Example 2

Comparison between standard coffee and creamer mixes and coffee and creamer mixes with MCT (medium-chain triglyceride) oil.

| | Coffee Mix | | Creamer Mix | |
|---|---|---|---|---|
| | Standard | + MCT | Standard | + MCT |
| Powder density | 615 | 602 | 614 | 586 |
| | | 600 | | 590 |
| Tapped density 500 ml (g/litre) | | | | |
| Miscibility water @ 20°C | | | | |
| | | 72 sec. | | 14 sec. |
| **Time for a given amount of powder to sink in water** | > 360 sec. | 85 sec. | > 900 sec. | 25 sec. |
| | (14g) | (14g) | (25g) | (25g) |

### Example 3

### Product formula for creamer capsule

| **Ingredient** | **w/w dry basis** | **Capsule composition** |
|---|---|---|
| **PREMIX** | | |
| Sucrose | 9.5-10.5% | 1.0-1.5g |
| MCT oil | 0.1-0.5% | 0.01-0.1g |

| **MIX** | | |
|---|---|---|
| Premix | 9.6-11% | 1.0-1.6g |
| Sucrose | 25-30% | 3.0-4.0g |
| Milk powder | 10-15% | 1.0-2.0g |
| creamer | 45-55% | 6.0-7.0g |

### Product formula for coffee capsule

| **Ingredient** | **w/w dry basis** | **Capsule composition** |
|---|---|---|
| **PREMIX** | | |
| Sucrose | 9.5-10.5% | 1.0-1.5g |
| MCT oil | 0.1-0.5% | 0.01-0.1g |
| Flavour | 0.8-1.3% | 0.1-0.2g |

| **MIX** | | |
|---|---|---|
| Premix | 10.4-12.3% | 1.1-1.8g |
| Sucrose | 28-33% | 4.0-5.0g |
| Milk powder | 45-48% | 6.0-7.0g |
| coffee | 10-11% | 1.0-2.0g |

### Example 4

### Product formulation (total percentage in two capsules)

| **Ingredient** | **w/w dry basis** |
|---|---|
| sucrose | 35-45% |
| Milk powder | 25-35% |
| Creamer | 20-25% |
| coffee | 3-7% |
| Flavour | 0.1-1% |
| MCT oil | 0.1-0.5% |

The above product formulation could be used to prepare an ice cappuccino instant drink from two capsules.

### Example 5

Comparative example with and without MCT oil.

### ICED CAPPUCCINE

| | ***Creamer*** | ***Coffee*** | **Creamer MCT** | **Coffee MCT** |
|---|---|---|---|---|
| COFFEE (Instant) | | 1-2 | | 1-2 |
| SUGAR (sucrose) | 4-5.5 | 5-7 | 4-5.5 | 5-7 |
| Milk Powder | 1-2 | 6-7 | 1-2 | 6-7 |
| Creamer | 6-7 | | 6-7 | |
| Flavour | | 0,1-0.2 | | 0,1-0.2 |
| MCT Oil - | | | 0.01-0.1 | 0.01-0.1 |
| **Total** | **11-14.5** | **12.1-16.2** | **11.01-14.6** | **12.11-16.3** |

### Powder characteristics after mixing

| | | | | |
|---|---|---|---|---|
| Tapped dens. @ start (g/l) | 600 | 600 | (588) 577 | (601) 594 |
| Solubility % | 97 | | | |

Powder characteristics after
crushing (Filling process
simulation)

| | | | | |
|---|---|---|---|---|
| Tapped density (g/l) | 640 | 625 | | |
| Solubility % | 94 | 97 | 100 | 99 |

The results show the effect on density and on solubility of the presence of MCT oil. The solubility is evaluated visually after the capsules have been processed in a Nestlé^{®} Dolce Gusto^{™} branded beverage machine.

### Example 6

### Product formula for creamer capsule

| **Ingredient** | **w/w dry basis** | **Capsule composition** |
|---|---|---|
| **PREMIX** | | |
| Sucrose | 4.75-5.25% | 0.5-0.75g |
| Polyol | 4.75-5.25 | 0.5-0.75g |
| MCT oil | 0.1-0.5% | 0.01-0.1g |

| **MIX** | | |
|---|---|---|
| Premix | 9.6-11% | 1.0-1.6g |
| Sucrose | 25-30% | 3.0-4.0g |
| Milk powder | 10-15% | 1.0-2.0g |
| creamer | 45-55% | 6.0-7.0g |

### Product formula for coffee capsule

| **Ingredient** | **w/w dry basis** | **Capsule composition** |
|---|---|---|
| **PREMIX** | | |
| Sucrose | 4.75-5.25% | 0.5-0.75g |
| Polyol | 4.75-5.25% | 0.5-0.75g |
| MCT oil | 0.1-0.5% | 0.01-0.1g |
| Flavour | 0.8-1.3% | 0.1-0.2g |

| **MIX** | | |
|---|---|---|
| Premix | 10.4-12.3% | 1.1-1.8g |
| Sucrose | 28-33% | 4.0-5.0g |
| Milk powder | 45-48% | 6.0-7.0g |
| coffee | 10-11% | 1.0-2.0g |

### Example 7

### Product formula for creamer capsule

| **Ingredient** | **w/w dry basis** | **Capsule composition** |
|---|---|---|
| **PREMIX** | | |
| Polyol | 9.5-10.5% | 1.0-1.5g |
| MCT oil | 0.1-0.5% | 0.01-0.1g |

| **MIX** | | |
|---|---|---|
| Premix | 9.6-11% | 1.0-1.6g |
| Sucrose | 25-30% | 3.0-4.0g |
| Milk powder | 10-15% | 1.0-2.0g |
| creamer | 45-55% | 6.0-7.0g |

### Product formula for coffee capsule

| **Ingredient** | **w/w dry basis** | **Capsule composition** |
|---|---|---|
| **PREMIX** | | |
| Polyol | 9.5-10.5% | 1.0-1.5g |
| MCT oil | 0.1-0.5% | 0.01-0.1g |
| Flavour | 0.8-1.3% | 0.1-0.2g |

| **MIX** | | |
|---|---|---|
| Premix | 10.4-12.3% | 1.1-1.8g |
| Sucrose | 28-33% | 4.0-5.0g |
| Milk powder | 45-48% | 6.0-7.0g |
| coffee | 10-11% | 1.0-2.0g |

## Claims

1. Kit for the preparation of an instant drink comprising at least two capsules,
wherein a first capsule comprises a creamer component and a second component consisting of sugar and/or a bulking agent,
wherein a second capsule comprises a main flavour component and a second component consisting of sugar and/or a bulking agent.

2. Kit according to claim 1, wherein the first and second capsule both comprise milk powder.

3. Kit according to any of claims 1 or 2, wherein the creamer component is selected from dairy or non-dairy creamers, preferably is a dairy creamer.

4. Kit according to any of claims 1 to 3, wherein the main flavour component is selected from soluble coffee, soluble tea, soluble fruit drink, soluble chocolate powder or any combination thereof.

5. Kit according to any of claims 1 to 4, wherein the second capsule comprises additional flavours, aroma.

6. Kit according to any of claims 1 to 5, wherein at least part of the particles of sugar and/or bulking agent of the first and/or second capsule are coated with a food-grade oil.

7. Kit according to claim 6, wherein the food-grade oil comprises saturated triglycerides.

8. Kit according to any of claims 1 to 7, which is for the preparation of a cold instant drink, preferably a cold instant milk-based drink.
